# EUROPÄISCHE PATENTSCHRIFT

(11) **EP 0 311 908 B1**
(45) Veröffentlichungstag und Bekanntmachung des Hinweises auf die Patenterteilung: **17.02.1993**
(21) Anmeldenummer: 88116554.2
(22) Anmeldetag: 06.10.1988
(51) Int. Cl.: C08F 220/12, C08F 265/04, D06M 15/263, D04H 1/58

(54) **Verfahren zur Herstellung von wässrigen (Meth)acrylsäureester-Copolymer-Dispersionen in zwei Stufen und deren Verwendung als Imprägnier-, Überzugs- und Bindemittel für flächige Fasergebilde**
Process for the preparation of aqueous dispersions of copolymers of (meth)acrylic esters in two phases and their use as impregnate, as coating and as binding agent in fibrous pad
Procédé de préparation de dispersions aqueuses de copolymères d'esters (méth-)acryliques en deux phases et leur usage comme agent d'imprégnation de revêtement et liant pour des substrats textiles plats

(30) Priorität: 14.10.1987 DE 3734752
(43) Veröffentlichungstag der Anmeldung: 19.04.1989
(73) Patentinhaber: BASF Aktiengesellschaft, 67063 Ludwigshafen (DE)
(72) Erfinder: Phoehler, Peter, Dr., D-6720 Speyer (DE); Angel, Maximilian, Dr., D-6704 Mutterstadt (DE); Einwiller, Andreas, Dr., D-6800 Mannheim (DE); Schagerer, Klaus, Dr., D-6718 Gruenstadt (DE)

(56) Entgegenhaltungen:
- EP-A- 0 019 169
- DE-A- 2 725 586
- DE-A- 3 507 154

## Beschreibung

Um textilen Flächengebilden gute Naßfestigkeit und Reinigungsmittelbeständigkeit zu verleihen, ist es üblich, die Flächengebilde mit solchen Polymer-Dispersionen zu binden, die selbstvernetzende Gruppen, z.B. N-Methylolamid-Gruppen, aufweisen (vgl. z.B. US-PSen 3 137 589 und 4 002 801 sowie DE-OS 27 26 806). Dabei verliert aber das durch das vernetzte Bindemittel gebundene textile Flächengebilde die Fähigkeit heißsiegelfähig, z.B. gegen sich selbst oder gegen andere Substrate, z.B. aus PVC, zu sein. Die Kombination von Siegelfähigkeit einerseits und Naßfestigkeit andererseits wäre jedoch für den Hygienevlies-Sektor, z.B. für Babywindeln, aber auch in anderen Bereichen, wo es um einen klebstofffreien Verbund textiler Flächengebilde, ggf. mit anderen Substraten geht, die über eine genügende Naßfestigkeit verfügen müssen, z.B. Milchfilter, interessant. Dabei sind solchen Bindemitteln der Vorzug zu geben, bei deren Vernetzung kein Formaldehyd abgespaltet wird. Aus der DE-OS 28 55 147 sind heißsiegelfähige, antistatische Überzugsmittel auf der Basis wäßriger Copolymer-Dispersionen bekannt, die als elektroleitende Vinylmonomere olefinisch ungesättigte quaternäre Ammoniumsalze oder olefinisch ungesättigte Sulfosäuren einpolymerisiert enthalten. Als Hauptmonomere enthalten die Überzugsmittel vor allem Acrylmonomere einpolymerisiert. Die Überzugsmittel sollen zur Vermittlung heißsiegelnder Eigenschaften auf Filme, insbesondere auf Basis von Polyolefinen, Polystyrol, Polyvinylchlorid oder Polyamiden aufgebracht werden. Der DE-OS 28 55 147 ist kein Hinweis dafür zu entnehmen, inwieweit sich gegebenenfalls derartige Copolymer-Dispersionen als Bindemittel zum Verfestigen von Faservliesen eignen. Auch die aus der DE-PS 27 25 586 bekannten wäßrigen Überzugsmittel auf Basis von schalenförmig aufgebauten Vinylidenchlorid-Copolymerisat-Dispersionen, die geringe Menge Acrylester sowie Acrylsäure und N-Methylolacrylamid einpolymerisiert enthalten, dienen der Beschichtung von Folien, z.B. aus Polyolefinen, Polyethylenterephthalat oder Polycarbonaten und sollen zu Produkten führen, die eine verhältnismäßig niedrige Siegeltemperatur, gute Heißsiegelfähigkeit und zudem gute Gleit- und Antiblockeigenschaften aufweisen. Als Bindemittel für textile Flächengebilde sind derartige Copolymer-Dispersionen wegen ihrer Härte nicht geeignet und in der DE-PS 27 25 586 fehlt jeder Hinweis auf eine derartige Anwendung. Bei diesen bekannten Copolymer-Dispersionen soll die gute Siegelfestigkeit ausschließlich auf den Einsatz der speziellen Haftvermittler eines ungesättigten Carbonsäureamid-N-Methylol-Derivats zurückzuführen sein. Ohne den speziellen Haftvermittler waren die Siegelfestigkeiten unter vergleichbaren Bedingungen ungenügend. Aus der EP-PS 00 19 169 sind Bindemittel für Faservliese auf Basis von Butadien-Copolymer-Dispersionen oder von Polyacrylat-Dispersionen bekannt, die jeweils Acrylamidoglykolsäure in Mengen von 3 bis 10 Gew.%, bezogen auf die gesamten Monomeren, einpolymerisiert enthalten. Die damit gebundenen Faservliese weisen besonders hohe Wasch- und Trockenreinigungsbeständigkeiten auf, insbesondere dann, wenn sie zusätzlich noch N-Methylolacrylamid einpolymerisiert enthalten. Die DE-OS 35 07 154 betrifft ein Verfahren zur Herstellung textiler Flächengebilde unter Verwendung von Polyacrylaten, die 1 bis 10 Gew.% eines (Meth)acrylamidoglykolsäureester-ethers einpolymerisiert enthalten. Die Bindemittel führen zu einer für praktische Zwecke ausreichenden Naßfestigkeit, Wasser- und Waschlaugenbeständigkeit und geben beim Erhitzen keinen Formaldehyd ab. Werden verfestigte Fasergebilde gewünscht, die gegen organische Lösungsmittel beständig sind, so muß ein Vernetzungsmittel, beispielsweise Glyoxal, zugesetzt werden.

Aufgabe der vorliegenden Erfindung ist nun ein Verfahren zur Herstellung von Copolymer-Dispersionen, die insbesondere zum Binden von textilen Flächengebilden, wie Faservliese, geeignet sind und dabei Produkte ergeben, die hohe Naßfestigkeit und eine für praktische Zwecke ausreichende Heißsiegelfähigkeit und/oder Prägbarkeit aufweisen und die zudem beim Erhitzen keinen Formaldehyd freisetzen und einen weichen Griff besitzen.

Es wurde nun gefunden, daß man wäßrige (Meth)acrylester-Copolymer-Dispersionen durch Polymerisieren der Monomeren in zwei Stufen unterschiedlicher Monomerenzusammensetzung und unter Mitverwendung von vernetzend wirkenden Monomeren in wäßriger Emulsion bei üblicher Temperatur in Gegenwart der üblichen Emulgatoren und Polymerisationsinitiatoren, wobei in der ersten Stufe 40 bis 99,5 Gew.% und in der zweiten Stufe 60 bis 0,5 Gew.% der gesamten Monomeren polymerisiert werden, mit Vorteil herstellen kann, wenn ausschließlich die Monomeren der zweiten Stufe (Meth)acrylamidoglykolsäure und/oder deren Methylester und/oder deren Methylether in Mengen von 0,5 bis 10 Gew-%, bezogen auf die Gesamtmenge der zu polymerisierenden Monomeren, umfassen. Bei dem neuen Verfahren verwendet man vorzugsweise in beiden Stufen zusammen
(a) 85 bis 99,5 Gew.% α,β-monoolefinisch ungesättigte Carbonsäureester mit 3 bis 12 C-Atomen und
(b) 0,5 bis 10 Gew.% (Meth)acrylamidoglykolsäure und/oder deren Methylester und/oder deren Methylether sowie
(c) 0 bis 5 Gew.% α,β-monoolefinisch ungesättigte Carbonsäuren mit 3 bis 5 C-Atomen und/oder deren Amide
wobei als Monomere (a) nur bis zu 35 Gew.% Monocarbonsäurevinylester verwendet werden, die ganz oder teilweise durch Acrylnitril und/oder Styrol ersetzt werden können, wobei Art und Anteil der Komponenten so gewählt werden, daß die Glastemperatur der erhaltenen Copolymerisate unter 60°C liegt.

Als Hauptmonomere setzt man bei den neuen Verfahren Acryl- und/oder Methacrylsäureester 1 bis 8 C-Atome enthaltender Alkanole ein, z.B. Methylacrylat, Ethylacrylat, Isopropylacrylat, n-Butylacrylat und -methacrylat, Isobutyl-acrylat und -methacrylat, n-Hexylacrylat und -methacrylat sowie 2-Ethylhexylacrylat und -methacrylat. Geeignete Monocarbonsäurevinylester sind besonders Vinylacetat und Vinylpropionat sowie ferner Dimethyllaurat und Versaticsäurevinylester. Die Menge an einpolymerisierter Acrylamidoglykolsäure, Methacrylamidoglykolsäure und/oder deren Methylester und deren Methylether, die vernetzend wirken, liegt zwischen 0,5 und 10, vorzugsweise zwischen 1,5 und 6 Gew.%, bezogen auf die gesamten Monomeren (der 1. und 2. Stufe). Die Amidoglykolsäureverbindung der genannten Art wird ausschließlich in der zweiten Polymerisationsstufe eingesetzt.

Als vernetzend wirkende Comonomere können bei den erfindungsgemäßen Verfahren zusätzlich noch geringe Mengen, d.h. 0 bis 0,2 Gew.%, weitere vernetzend wirkende Comonomere, wie Divinylbenzol, Allylmethacrylat oder Butandioldiacrylat, insbesondere in der ersten Polymerisationsstufe, mitverwendet werden, wodurch die mechanische Festigkeit der mit den Dispersionen verfestigten Substrate erhöht werden kann.

Auch können bei der erfindungsgemäßen Copolymerisation noch 0 bis 8, insbesondere 0 bis 5 Gew.%, bezogen auf die gesamten Monomeren, an monoolefinisch ungesättigten, 3 bis 5 C-Atomen aufweisenden Mono- und/oder Dicarbonsäuren und/oder deren Amide, wie besonders Acrylsäure, Methacrylsäure, Acrylamid und Methacrylamid sowie ferner Maleinsäure, Itaconsäure, Fumarsäure, Maleinsäuremonoamid und -diamid, Maleinsäureimid und Fumarsäurediamid copolymerisiert werden. Insgesamt wird bei dem Verfahren im allgemeinen eine Polymerzusammensetzung angestrebt, deren Glastemperatur vorzugsweise unter 60°C, insbesondere unter 20°C liegen soll.

Die erfindungsgemäße Emulsionspolymerisation wird in zwei Stufen unter Verwendung der üblichen Emulgatoren und Polymerisationsinitiatoren durchgeführt, wobei in der ersten Stufe 40 bis 99,5 Gew.%, vorzugsweise 60 bis 98,5 Gew.% und in der zweiten Stufe 60 bis 0,5, vorzugsweise 40 bis 1,5 Gew.%, bezogen auf die gesamten Monomeren, polymerisiert werden. Die Emulsionspolymerisation wird meist nach dem Monomeren- oder Emulsionszulaufverfahren bei Temperaturen von 30 bis 100, insbesondere von 50 bis 95°C durchgeführt.

Der Monomerenzulauf der 2. Stufe erfolgt im allgemeinen nach dem Abschluß des Monomerenzulaufs der 1. Stufe, doch kann auch in geringem Umfang eine Überschneidung der Monomeren-Zuläufe erfolgen, die bis zu etwa 35 % betragen kann.

Als Polymerisationsinitiatoren kommen insbesondere wasserlösliche Peroxide, wie Kaliumpersulfat, Wasserstoffperoxid, Peroxocarbonate sowie Natrium- oder Ammoniumperoxidisulfate in Frage. Als Polymerisationsinitiatoren von besonderem Interesse sind sogenannte Redoxkatalysatoren, d.h. Systeme aus einem Oxidations- und einem Reduktionsmittel. Geeignete Oxidationskomponenten sind z.B. Wasserstoffperoxid, Kaliumpersulfat, Peroxocarbonate, Natrium- oder Ammoniumperoxidisulfate;
geeignete Reduktionskomponenten sind z.B. Ascorbinsäure, Alkalidisulfite, Alkali- oder Ammoniumhydrogensulfite, Alkalithiosulfat, Alkalidithionit, ferner Eisen-(II)-sulfat.

Im allgemeinen wird in der ersten Stufe ein Anteil von 0,1 bis 2, in der zweiten Stufe ein Anteil von 0,1 bis 1 Gew.% der Polymerisationsinitiatoren eingesetzt.

Als Emulgiermittel werden bei dem neuen Emulsionspolymerisationsverfahren anionische Emulgatoren wie insbesondere sulfatierte Akylphenolethoxylate, Alkylarylsulfonate, Alkylsulfate, Alkylethersulfate vorgezogen, wobei ihre Menge vorzugsweise 0,5 bis 3, insbesondere 1 bis 2 Gew.%, bezogen auf die Monomeren beträgt. Die Menge an Polymerisationsinitiatoren liegt im allgemeinen zwischen 0,1 und 2, insbesondere zwischen 0,2 und 0,8 Gew.%, bezogen auf die gesamten Monomeren. Zusätzlich zu den anionischen Emulgiermitteln können auch nichtionische Emulgiermittel z.B. alkoxylierte Alkylphenole mit 25 bis 50 Ethylenoxid- und/oder Propylenoxidresten, eingesetzt werden, und ihre Menge kann im allgemeinen bis zu 100 Gew.%, bezogen auf die anionischen Emulgatoren betragen.

Die nach dem neuen Verfahren hergestellten wäßrigen Copolymer-Dispersionen sollen im allgemeinen einen Copolymerisat-Gehalt von 35 bis 65, insbesondere von 40 bis 55 Gew.%, haben. Sie eignen sich insbesondere als Bindemittel für flächige textile Gebilde, denen sie Heißsiegelfähigkeit bei guter Naßfestigkeit und weichem Griff verleihen. Bei ihrem Einsatz zum Binden von flächigen textilen Substraten können Pigmente, Antioxidantien, Farbstoffe, Weichmacher und Filmbildehilfsmittel in den üblichen Mengen mitverwendet werden. Sie können mit Vorteil als Bindemittel für Faservliese aus den üblichen natürlichen und/oder synthetischen Fasern, z.B. aus Wolle, Baumwolle, Viskose, Polyamiden, Polyestern oder Polypropylen eingesetzt werden. Sie eignen sich auch zum Imprägnieren von gewebten und ungewebten flächigen textilen Gebilden und machen die gebundenen textilen Gebinde prägbar und heißsiegelfähig. Bei dem Einsatz der aus dem erfindungsgemäßen Verfahren hergestellten wäßrigen Copolymer-Dispersionen können auch übliche Schauminhibitoren, Netzmittel, Thermosensibilisierungsmittel, Antistatika, Flammschutzmittel, Bakterizide und Füllstoffe mitverwendet werden. Die Dispersionen können bei ihrem Einsatz als Bindemittel für Faservliese in an sich üblicher Weise durch Imprägnieren, Schaumimprägnieren, Sprühen, Pflatschen, Streichen oder Bedrucken aufgebracht werden. Nach dem Abtrennen des überschüssigen Bindemittels, z.B. durch Abquetschen kann das imprägnierte Vlies getrocknet und dann getempert werden, wobei Temperaturen von 110 bis 200, vorzugsweise von 120 bis 170°C angewandt werden können. Gute Ergebnisse wurden bei einem Bindemittelgehalt von verfestigten Faservliesen von 10 bis 50 Gew.%, bezogen auf das Fasergewicht, erzielt.

Die gemäß der Erfindung hergestellten gebundenen Vliese zeichnen sich gegenüber konventionell gebundenen Vliesen durch die Kombination sehr guter Naßfestigkeit und sehr guter Heißsiegelfähigkeit aus. Dies ist von besonderer Bedeutung, wenn das textile Vlies bei der Herstellung, der Weiterverarbeitung oder beim Gebrauch in nassem Zustand einer mechanischen Beanspruchung ausgesetzt wird und zusätzlich noch gesiegelt werden soll.

Ein typischer Anwendungsfall ist die Herstellung von sogenannten Wegwerfwindeln: Die erfindungsgemäß gebundenen Faservliese bilden die äußere Hülle der Windel, die einen saugfähigen Füllstoff umgibt. Das aus synthetischen Fasern aufgebaute Hüllvlies besitzt eine vergleichsweise trockene Oberfläche, auch wenn der Füllstoff erhebliche Mengen Flüssigkeit aufgenommen hat. Unter mechanischer Belastung reißt das äußere Hüllvlies in der Praxis nicht und eine Freisetzung des nassen Füllstoffs wird verhindert. Von gleichgroßer Bedeutung für den Gebrauch der Windel ist natürlich auch die Siegelnahtfestigkeit, die angibt, welcher mechanischen Belastung die miteinander versiegelten Teile standhalten, bevor die Naht aufreißt.

Die in den folgenden Beispielen angegebenen Teile und Prozente beziehen sich auf das Gewicht.

### Beispiel 1

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 303 Teilen Wasser, 368 Teilen Ethylacrylat, 108 Teilen Methylacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion im Verlauf von 2 Stunden. Nach Ende des Zulaufs wird eine zweite Emulsion bestehend aus 252 Teilen Wasser, 108 Teilen Ethylacrylat, 61 Teilen Methylacrylat, 30,5 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure innerhalb einer Stunde zulaufen lassen.

Anschließend wird bei 60°C zwei weitere Stunden nachpolymerisiert. Man erhält eine stabile koagulatfreie Dispersion eines Feststoffgehalts von 45 %.

### Beispiel 2

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 303 Teilen Wasser, 392 Teilen Ethylacrylat, 85 Teilen Vinylacetat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 252 Teilen Wasser, 85 Teilen Ethylacrylat, 85 Teilen Vinylacetat, 30,5 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zulaufen lassen.

Anschließend wird bei 60°C zwei weitere Stunden nachpolymerisiert. Man erhält eine stabile koagulatfreie Dispersion eines Feststoffgehalts von 45 %.

### Beispiel 3

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 303 Teilen Wasser, 392 Teilen Ethylacrylat, 85 Teilen Methylmethacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 252 Teilen Wasser, 85 Teilen Ethylacrylat, 85 Teilen Methylmethacrylat, 30,5 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zulaufen lassen.

Anschließend wird bei 60°C zwei weitere Stunden nachpolymerisiert. Man erhält eine stabile koagulatfreie Dispersion eines Feststoffgehalts von 45 %.

### Beispiel 4

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 314 Teilen Wasser, 368 Teilen Ethylacrylat, 108 Teilen Methylacrylat, 6,75 Teilen eines Additionsproduktes aus Isooctylphenol und 25 Mol Ethylenoxid, 6,75 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 242 Teilen Wasser, 122 Teilen Ethylacrylat, 61 Teilen Methylacrylat, 17,0 Teilen Methacrylamidoglykolsäure, 3,4 Teilen eines Additionsproduktes aus Isooctylphenol und 25 Mol Ethylenoxid, 3,4 Teilen eines sulfatierten Additionsproduktes aus Isooctylphenol und 25 Mol Ethylenoxid und 0,4 Teilen Ascorbinsäure im Verlauf einer Stunde zulaufen lassen.

Anschließend wird bei 60°C zwei weitere Stunden nachpolymerisiert. Man erhält eine stabile koagulatfreie Dispersion eines Feststoffgehalts von 45 %.

### Beispiel 5

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 303 Teilen Wasser, 368 Teilen Ethylacrylat, 108 Teilen Methylacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 252 Teilen Wasser, 116 Teilen Methylacrylat, 66 Teilen n-Butylacrylat, 17 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zulaufen lassen.

Anschließend wird bei 60°C zwei weitere Stunden nachpolymerisiert. Man erhält eine stabile koagulatfreie Dispersion von 45 % Feststoffgehalt.

### Beispiel 6

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 208 Teilen Wasser gibt man bei 60°C eine aus 303 Teilen Wasser, 412 Teilen Ethylacrylat, 212 Teilen Methylacrylat, 40 Teilen n-Butylacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion im Verlauf von 2 Stunden. Nach Ende des Zulaufs wird eine zweite Monomerenmischung bestehend aus 252 Teilen Wasser, 10 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zugefahren.

Anschließend wird bei 60°C zwei weitere Stunden nachpolymerisiert. Man erhält eine stabile koagulatfreie Dispersion eines Feststoffgehaltes von 45 % Feststoffgehalt.

### Beispiel 7

Man arbeitet wie in Beispiel 6, die zweite Monomerenmischung enthält aber 17 Teile Acrylamidoglykolsäure.

Man erhält eine stabile koagulatfreie Dispersion eines Feststoffgehlts von 45 %.

### Beispiel 8

Man arbeitet wie in Beispiel 6. In der ersten Stufe werden 283 Teile Wasser eingesetzt (statt 303). Die zweite Monomerenmischung enthält 24 Teile Acrylamidoglykolsäure und 272 Teile Wasser.

Man erhält eine stabile koagulatfreie Dispersion eines Feststoffgehalts von 45 %.

### Beispiel 9

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 208 Teilen Wasser gibt man bei 60°C eine aus 303 Teilen Wasser, 476 Teilen Ethylacrylat, 169 Teilen Methylacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion im Verlauf von 2 Stunden. Nach Ende des Zulaufs wird eine zweite Monomerenmischung bestehend aus 252 Teilen Wasser, 31 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zugefahren.

Anschließend wird bei 60°C zwei weitere Stunden nachpolymerisiert. Man erhält eine stabile koagulatfreie Dispersion eines Feststoffgehalts von 45 %.

### Beispiel 10

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 208 Teilen Wasser gibt man bei 60°C eine aus 283 Teilen Wasser, 652 Teilen Ethylacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Monomerenmischung bestehend aus 272 Teilen Wasser, 24 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zugefahren.

Anschließend wird bei 60°C zwei weitere Stunden nachpolymerisiert. Man erhält eine stabile koagulatfreie Dispersion eines Feststoffgehalts von 45 %.

### Beispiel 11

Man verfährt zunächst wie im Beispiel 3. Nach Ende des Zulaufs 1 wird aber eine zweite Emulsion bestehend aus 252 Teilen Wasser, 105 Teilen Ethylacrylat, 84 Teilen Methylmethacrylat und 10 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zugefahren.

Anschließend wird bei 60°C zwei weitere Stunden nachpolymerisiert. Man erhält eine stabile koagulatfreie Dispersion eines Feststoffgehalts von 45 %.

### Beispiel 12

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 303 Teilen Wasser, 368 Teilen Ethylacrylat, 108 Teilen Methylacrylat, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 252 Teilen Wasser, 108 Teilen Ethylacrylat, 61 Teilen Vinylpropionat, 31 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zugefahren.

Anschließend wird bei 60°C zwei weitere Stunden nachpolymerisiert. Man erhält eine stabile koagulatfreie Dispersion eines Feststoffgehalts von 45 %..

### Beispiel 13

Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 202 Teilen Wasser, 385 Teilen Ethylacrylat, 85 Teilen Vinylacetat, 7 Teilen Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 350 Teilen Wasser, 85 Teilen Vinylacetat, 61 Teilen Ethylacrylat, 41 Teilen Acrylamidoglykolsäure, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zugefahren.

Anschließend wird bei 60°C zwei weitere Stunden nachpolymerisiert. Man erhält eine stabile koagulatfreie Dispersion eines Feststoffgehalts von 45 %.

### Beispiel 14

Man geht vor wie in Beispiel 2, beginnt aber die 2. Stufe zuzufahren, wenn von der ersten Stufe 70 % zugefahren sind. Die Zulaufgeschwindigkeit der einzelnen Stufen werden beibehalten (überschneidende Stufen).

Man erhält eine stabile koagulatfreie Dispersion eines Feststoffgehalts von 45 %.

### Beispiel 15

Man geht vor wie in Beispiel 2, beginnt aber die 2. Stufe in die erste Stufe zuzufahren, wenn von der ersten Stufe 70 % zugefahren sind. Die Zulaufgeschwindigkeiten werden beibehalten (Stufenfahrweise mit Gradientenfahrweise kombiniert).

Man erhält eine stabile koagulatfreie Dispersion eines Feststoffgehalts von 45 %.

### Vergleichsversuche

(A) Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 555 Teilen Wasser, 476 Teilen Ethylacrylat, 169 Teilen Methylacrylat, 10,1 Teilen eines Additionsproduktes aus Isooctylphenol und 25 Mol Ethylenoxid, 10,1 Teilen eines sulfatierten Additionsproduktes aus Isooctylphenol und 25 Mol Ethylenoxid und 1,35 Teilen Ascorbinsäure und 30,5 Teilen Acrylamidoglykolsäure bestehende Emulsion im Verlauf von 3 Stunden. Anschließend wird bei 60°C zwei weitere Stunden nachpolymerisiert. Man erhält eine stabile koagulatfreie Dispersion eines Feststoffgehalts von 45 %.
(B) Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 555 Teilen Wasser, 476 Teilen Ethylacrylat, 169 Teilen Vinylacetat, 10,1 Teilen eines Additionsproduktes aus Isooctylphenol und 25 Mol Ethylenoxid, 10,1 Teilen eines sulfatierten Additionsproduktes aus Isooctylphenol und 25 Mol Ethylenoxid und 1,35 Teilen Ascorbinsäure und 30,5 Teilen Acrylamidoglykolsäure bestehende Emulsion innerhalb von 3 Stunden. Anschließend wird bei 60°C zwei weitere Stunden nachpolymerisiert. Man erhält eine stabile koagulatfreie Dispersion eines Feststoffgehalts von 45 %.
(C) Man verfährt wie in Beispiel 3, polymerisiert aber einstufig wie in Beispiel A.
   Die einstufig gefahrene Dispersion ist nicht stabil.
(D) Man arbeitet wie in Beispiel 1 angegeben, setzt aber als vernetzendes Monomeres anstelle der 30,5 Teilen Acrylamidoglykolsäure ein Gemisch aus 21 Teilen N-Methylolmethacrylamid und 6 Teilen Acrylamid ein. Man erhält unter sonst gleichen Bedingungen eine stabile, koagulatfreie Dispersion eines Feststoffgehalts von 45 %.
(E) Man arbeitet wie in Beispiel 1 angegeben, setzt aber anstelle der 30,5 Teile Acrylamidoglykolsäure ein Gemisch aus 15 Teilen Methacrylsäure und 12 Teilen Acrylamid ein. Man erhält eine stabile, koagulatfreie Dispersion eines Feststoffgehalts von 45 %.
(F) Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 314 Teilen Wasser, 368 Teilen Ethylacrylat, 108 Teilen Methylacrylat, 6,75 Teilen eines Additionsproduktes aus Isooctylphenol und 25 Mol Ethylenoxid, 6,75 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 231 Teilen Wasser, 122 Teilen Ethylacrylat, 68 Teilen Methylacrylat, 10,5 Teilen N-Methylolacrylamid, 3,4 Teilen eines Additionsproduktes aus Isooctylphenol und 25 Mol Ethylenoxid, 3,4 Teilen eines sulfatierten Additionsproduktes aus Isooctylphenol und 25 Mol Ethylenoxid und 0,4 Teilen Ascorbinsäure im Verlauf einer Stunde zulaufen lassen.
   Anschließend wird bei 60°C zwei weitere Stunden nachpolymerisiert. Man erhält eine stabile koagulatfreie Dispersion eines Feststoffgehalts von 45 %.
(G) Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 211 Teilen Wasser gibt man bei 60°C eine aus 303 Teilen Wasser, 351 Teilen Ethylacrylat, 108 Teilen Methylacrylat, 17 Teilen Acrylamidoglykolsäure, 8,6 Teilen eines Additionsproduktes aus Isooctylphenol und 25 Mol Ethylenoxid, 8,6 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 252 Teilen Wasser, 125 Teilen Methylacrylat, 74 Teilen n-Butylacrylat, 1,5 Teilen eines Additionsproduktes aus Isooctylphenol und 25 Mol Ethylenoxid, 1,5 Teilen eines sulfatierten Additionsproduktes aus Isooctylphenol und 25 Mol Ethylenoxid und 0,4 Teilen Ascorbinsäure im Verlauf einer Stunde zulaufen lassen.
   Anschließend wird bei 60°C zwei weitere Stunden nachpolymerisiert. Man erhält eine stabile koagulatfreie Dispersion eines Feststoffgehalts von 45 %.
(H) Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 201 Teilen Wasser gibt man bei 60°C eine aus 365 Teilen Ethylacrylat, 108 Teilen Methylacrylat, 3,5 Teilen N-Methylolmethacrylamid, 6,7 Teilen eines Additionsproduktes aus Isooctylphenol und 25 Mol Ethylenoxid, 6,7 Teilen eines sulfatierten Additionsproduktes aus Isooctylphenol und 25 Mol Ethylenoxid und 0,95 Teilen Ascorbinsäure bestehende Emulsion innerhalb von 2 Stunden. Nach Ende des Zulaufs wird eine zweite Emulsion bestehend aus 247 Teilen Wasser, 122 Teilen Ethylacrylat, 61 Teilen Methylacrylat, 17 Teilen Acrylamidoglykolsäure, 3,4 Teilen eines Additionsproduktes aus Isooctylphenol und 25 Mol Ethylenoxid, 3,4 Teilen eines sulfatierten Additionsproduktes aus Isooctylphenol und 25 Mol Ethylenoxid und 0,4 Teilen Ascorbinsäure im Verlauf einer Stunde zugefahren.
   Anschließend wird bei 60°C zwei weitere Stunden nachpolymerisiert. Man erhält eine stabile koagulatfreie Dispersion eines Feststoffgehalts von 45 %.
(I) Zu einer Lösung von 4,5 Teilen einer 30 %igen wäßrigen Lösung von Wasserstoffperoxid, 0,0135 Teilen Ascorbinsäure und 0,001 Teilen Eisen(II)-sulfat in 208 Teilen Wasser gibt man bei 60°C eine aus 553 Teilen Wasser, 422 Teilen Ethylacrylat, 213 Teilen Methylacrylat, 41 Teilen n-Butylacrylat, 10,1 Teilen eines Additionsproduktes aus Isooctylphenol und 25 Mol Ethylenoxid, 10,1 Teilen eines sulfatierten Additionsproduktes aus Isooctylphenol und 25 Mol Ethylenoxid und 1,35 Teilen Ascorbinsäure bestehende Emulsion im Verlauf von 3 Stunden.
   Anschließend wird bei 60°C zwei weitere Stunden nachpolymerisiert. Man erhält eine stabile koagulatfreie Dispersion eines Feststoffgehalts von 45 %.
(K) Man verfährt Wie in Beispiel 12, polymerisiert aber einstufig wie in Beispiel A. Man erhält eine stabile koagulatfreie Dispersion eines Feststoffgehalts von 45 %.
(L) Man verfährt wie in Beispiel 10, polymerisiert aber einstufig wie in Beispiel A. Man erhält eine stabile koagulatfreie Dispersion eines Feststoffgehalts von 45 %.

### Untersuchungen an gebundenen Faservliesen

I Ein Faservlies aus 100 % Polyester-Fasern (3,3 dtex/60 mm Stapellänge) wird bei einem Faser/Binder-Verhältnis = 2:1 mit den Bindemitteln der Beispiele und Vergleichsversuche getränkt, der Binderüberschuß zwischen 2 Walzen abgequetscht und das imprägnierte Substrat 4 Minuten bei 150°C getrocknet und getempert. Das Flächen-Endgewicht beträgt 50 g/m². Die Ergebnisse des Streifenzugversuchs (DIN 53 857, Blatt 2) und die Ergebnisse der Zugversuche nach der Heißsiegelung (Siegelbedingungen 2 Sekunden, 170°C, 6 bar, Siegelfläche 5 cm², Siegelung Unterseite gegen Oberseite des Vlieses) sind in den folgenden Tabellen zusammengestellt.

**Tabelle 1**

| (Streifen-Zugversuch (N/50 mm Streifenbreite) | | | | | |
|---|---|---|---|---|---|
| Polymerisat von Beispiel | 1 | 2 | 3 | 4 | 5 |
| Höchstzugkraft (trocken) | 83 | 82 | 98 | 91 | 93 |
| Höchstzugkraft (wassernaß) | 58 | 43 | 63 | 25 | 33 |
| Höchstzugkraft (nach Siegelung) | 12,4 | 17,6 | 9,9 | 10,1 | 11,4 |

**Tabelle 2**

| (Streifenzugversuch (N/50 mm Streifenbreite) | | | | | | |
|---|---|---|---|---|---|---|
| Polymerisat von Vergleichsversuch | A | B | D | E | F | G |
| Höchstzugkraft (trocken) | 73 | 82 | 112 | 100 | 79 | 80 |
| Höchstzugkraft (wassernaß) | 39 | 41 | 51 | 7 | 10 | 29 |
| Höchstzugkraft (nach Siegelung) | 1,3 | 1,9 | 0 | 22 | 15,1 | 1,1 |

**Tabelle**

| Polyester-Vlies | | | | | | | |
|---|---|---|---|---|---|---|---|
| Streifenzugversuch | (Werte in N/50 mm Streifenbreite) | | | | | | |
| Polymerisat von Beispiel | 6 | 7 | 8 | 9 | 10 | 11 | 12 |
| Höchstzugkraft (trocken | 89 | 103 | 121 | 97 | 55 | 112 | 73 |
| Höchstzugkraft (wassernaß) | 41 | 46 | 55 | 36 | 65 | 49 | 43 |
| Höchstzugkraft (nach Siegelung) | 17,0 | 10,1 | 18,2 | 16,4 | 26,1 | 14,1 | 13,2 |

| Polymerisat von Beispiel bzw. Vergleichsversuche | 13 | 14 | 15 | H | I | K | L |
|---|---|---|---|---|---|---|---|
| Höchstzugkraft (trocken | 91 | 121 | 131 | 103 | 65 | 68 | 101 |
| Höchstzugkraft (wassernaß) | 55 | 66 | 73 | 63 | 10,7 | 40 | 62 |
| Höchstzugkraft (nach Siegelung) | 14,9 | 13,1 | 12,5 | 0 | 21,2 | 2,0 | 0 |

II Ein Vlies, bestehend aus Viskose-Fasern (2,8 dtex/40 mm Stapellänge) wird bei einem Faser/Binder-Verhältnis = 2:1 mit den Bindemitteln der Beispiele und Vergleichsversuche getränkt, der Binderüberschuß zwischen 2 Walzen abgequetscht und das imprägnierte Substrat 4 Minuten bei 150°C getrocknet und kondensiert. Das Flächen-Endgewicht beträgt 50 g/m². Die Ergebnisse sind in den folgenden Tabellen zusammengestellt.

**Tabelle 3**

| (Streifen-Zugversuch (N/50 mm Streifenbreite) | | | | | |
|---|---|---|---|---|---|
| Polymerisat von Beispiel | 1 | 2 | 3 | 4 | 5 |
| Höchstzugkraft (trocken) | 70 | 73 | 81 | 110 | 99 |
| Höchstzugkraft (wassernaß) | 34 | 31 | 36 | 40 | 44 |
| Höchstzugkraft (nach Siegelung) | 6,3 | 8,1 | 4,4 | 10,1 | 8,5 |

**Tabelle 4**

| (Streifenzugversuch (N/50 mm Streifenbreite) | | | | | | |
|---|---|---|---|---|---|---|
| Polymerisat von Vergleichsversuche | A | B | D | E | F | G |
| Höchstzugkraft (trocken) | 79 | 73 | 106 | 102 | 88 | 111 |
| Höchstzugkraft (wassernaß) | 34 | 35 | 39 | 12 | 19 | 40 |
| Höchstzugkraft (nach Siegelung) | 0 | 1,2 | 0 | 16 | 9,5 | 1,4 |

**Tabelle**

| Viskose-Vlies | | | | | | | |
|---|---|---|---|---|---|---|---|
| Streifenzugversuch | (Werte in N/50 mm Streifenbreite) | | | | | | |
| Polymerisat von Beispiel | 6 | 7 | 8 | 9 | 10 | 11 | 12 |
| Höchszugkraft (trocken | 82 | 116 | 91 | 104 | 69,5 | 90 | 68 |
| Höchstzugkraft (wassernaß) | 39 | 41 | 39 | 42 | 37,5 | 41 | 34 |
| Höchstzugkraft (nach Siegelung) | 12,8 | 10,9 | 8,9 | 7,7 | 7,6 | 16,8 | 6,5 |

| Polymerisat von Bsp. bzw. Vergleichsversuch | 13 | 14 | 15 | H | I | K | L |
|---|---|---|---|---|---|---|---|
| Höchstzugkraft (trocken | 96 | 100 | 100 | 85 | 77 | 74 | 92 |
| Höchstzugkraft (wassernaß) | 43 | 45 | 43 | 44 | 17 | 35 | 42 |
| Höchstzugkraft (nach Siegelung) | 11,6 | 11,1 | 8,1 | 0 | 13,2 | 1,0 | 0 |

## Patentansprüche

1. Verfahren zur Herstellung von wäßrigen (Meth)acrylester-Copolymer-Dispersionen durch Polymerisieren der Monomeren in zwei Stufen unterschiedlicher Monomerenzusammensetzung und unter Mitverwendung von vernetzend wirkenden Monomeren in wäßriger Emulsion bei üblicher Temperatur in Gegenwart der üblichen Emulgatoren und Polymerisationsinitiatoren, wobei in der ersten Stufe 40 bis 99,5 Gew.-% und in der zweiten Stufe 60 bis 0,5 Gew.-% der gesamten Monomeren polymerisiert werden, dadurch gekennzeichnet, daß ausschließlich die Monomeren der zweiten Stufe (Meth)acrylamidoglykolsäure und/oder deren Methylester und/oder deren Methylether in Mengen von 0,5 bis 10 Gew.-%, bezogen auf die Gesamtmenge der zu polymerisierenden Monomeren, umfassen.

2. Verfahren nach Anspruch 1, dadurch gekennzeichnet, daß als Monomere in beiden Stufen zusammen
(a) 85 bis 99,5 Gew.% α,β-monoolefinisch ungesättigte Carbonsäureester mit 3 bis 12 C-Atome und
(b) 0,5 bis 10 Gew.% (Meth)acrylamidoglykolsäure und/oder deren Methylester und/oder deren Methylether sowie
(c) 0 bis 5 Gew.% α,β-monoolefinisch ungesättigte Carbonsäuren mit 3 bis 5 C-Atomen und/oder deren Amide
eingesetzt werden, wobei als Monomere (a) nur bis zu 35 Gew.% Monocarbonsäurevinylester verwendet werden, die ganz oder teilweise durch Acrylnitril und/oder Styrol ersetzt werden können, derart, daß die Glastemperatur der erhaltenen Copolymerisate unter 60°C liegt.

3. Verwendung der nach den Ansprüchen 1 oder 2 erhaltenen Copolymer-Dispersionen als Bindemittel für flächige textile Fasergebilde.

## Claims

1. A process for the preparation of an aqueous (meth)acrylate copolymer dispersion by polymerization of the monomers in two stages having different monomer compositions and with the concomitant use of crosslinking monomers in aqueous emulsion at the usual temperatures in the presence of a conventional emulsifier and polymerization initiator, from 40 to 99.5% by weight of the total monomers being polymerized in the first stage and from 60 to 0.5% by weight of the total monomers being polymerized in the second stage, wherein only the monomers of the second stage comprise (meth)acrylamidoglycollic acid and/or its methyl ester and/or its methyl ether in amounts of from 0.5 to 10% by weight, based on the total amount of the monomers to be polymerized.

2. A process as claimed in claim 1, wherein
(a) from 85 to 99.5% by weight of α,β-monoolefinically unsaturated carboxylic esters of 3 to 12 carbon atoms and
(b) from 0.5 to 10% by weight of (meth)acrylamidoglycollic acid and/or its methyl ester and/or its methyl ether and
(c) from 0 to 5% by weight of α,β-monoolefinically unsaturated carboxylic acids of 3 to 5 carbon atoms and/or their amides
are used as monomers in both stages together, the monomers (a) used comprising only up to 35% by weight of vinyl monocarboxylates, some or all of which can be replaced by acrylonitrile and/or styrene, so that the glass transition temperature of the resulting copolymer is below 60°C.

3. Use of a copolymer dispersion obtained as claimed in claim 1 or 2 as a binder for sheet-like textile fibrous structures.

## Revendications

1. Procédé de préparation de dispersions aqueuses de copolymères d'esters (méth)acryliques par polymérisation des monomères en deux étapes de synthèse de monomères différentes et avec emploi simultané de monomères à action de réticulation, en émulsion aqueuse aux températures usuelles, en présence des émulsifiants et des amorçeurs de polymérisation usuels, 40 à 99,5% des monomères totaux étant polymérisés dans la première étape et 60 à 0,5% en poids des monomères totaux dans la deuxième étape, caractérisé en ce que uniquement les monomères de la deuxième étape comprennent des acides (méth)acrylamidoglycolique et/ou leurs esters méthyliques et/ou leurs éthers méthyliques à raison de 0,5 à 10% en poids par rapport à la quantité totale des polymères à polymériser.

2. Procédé selon la revendication 1, caractérisé en ce qu'on introduit ensemble, comme monomères dans la deuxième étape,
a) 85 à 99,5% en poids d'un ester carboxylique insaturé α,β-monooléfinique ayant de 3 à 12 atomes de carbone et
b) 0,5 à 10% en poids d'un acide (méth)acrylamidoglycolique et/ou de son ester méthylique et/ou de son éther méthylique ainsi que
c) 0 à 5% en poids d'acides carboxyliques insaturés α,β-monooléfinique ayant de 3 à 5 atomes de carbone et/ou de leurs amides,
en n'utilisant conne monomère a) que jusqu'à 35% en poids d'ester vinylique d'acide monocarboxylique qui peut être remplacé en totalité ou en partie par de l'acrylonitrile et/ou du styrène, de telle façon que la température de transition vitreuse du copolymère obtenu soit inférieure à 60°C.

3. Utilisation des dispersions de copolymères obtenues selon les revendications 1 ou 2 comme liants pour produits de fibres textiles plats.
